# EUROPEAN PATENT APPLICATION

(11) **EP 4 752 237 A1**
(43) Date of publication of application: **03.06.2026**
(21) Application number: 25159941.1
(22) Date of filing: 25.02.2025
(51) Int. Cl.: C21C 5/56, C21C 7/06, C22B 7/00

(54) **METHOD AND APPARATUS FOR RECYCLING AND PROCESSING INFERIOR STEEL SCRAP THROUGH ONE-STAGE STEEL MAKING IN LADLE REFINING FURNACE**

(30) Priority: 28.11.2024 TW 113146084
(71) Applicant: Walsin Lihwa Corporation, Taipei City 110 (TW)
(72) Inventor: WEI, Yu-Sheng, 110 Taipei City (TW); HSIAO, Ming-Hung, 110 Taipei City (TW); CHEN, Wen-Tao, 110 Taipei City (TW); CHIANG, Fu-Hang, 110 Taipei City (TW); WANG, Jian-Tang, 110 Taipei City (TW); XU, Ming-Hao, 110 Taipei City (TW); WANG, Yu-Ching, 110 Taipei City (TW)
(74) Representative: Viering, Jentschura & Partner mbB Patent- und Rechtsanwälte

(57) **Abstract**

A method and an apparatus for recycling and processing inferior steel scrap through one-stage smelting in a refining furnace (1) that are particularly suitable for high-value alloy steel and involve introducing inferior steel scrap into the refining furnace (1) at a weight ratio of 50% or more; melting the inferior steel scrap in the refining furnace (1); and introducing a reducing agent into the refining furnace (1) to reduce and deoxygenate the inferior steel scrap into molten steel (A) for process use. The apparatus has a dust cage (2) provided above the refining furnace (1) and a dust-collecting structure (3) provided above the dust cage (2). The apparatus includes a scrap silo (4) and a composition-adjusting silo (7). The scrap silo (4) has a feeding member (5) equipped with a vibrating mechanism, rolling mechanism, stirring mechanism, or an agitating mechanism, and a movable feeding tube (6) for continuous feeding of the inferior steel scrap and adjusting a feeding position of the inferior steel scrap. The composition-adjusting silo (7) is for delivering a composition-adjusting material.

## Description

### BACKGROUND OF THE INVENTION

### 1. Technical Field

The present invention relates to a method and an apparatus for recycling and processing inferior steel scrap through one-stage steel making in a ladle refining furnace (LDF) having the features of claim 1. More particularly, it relates to a method and an apparatus for processing inferior steel scrap in the form of shavings, turning chips, iron with slag (ball-milled water-washed materials), scales, flame-cutting chips, lapping chips, peels, CNC shavings, and similar scrap from metal processing in a ladle refining furnace through one-stage smelting for recycling the inferior steel scrap. Therein, the inferior steel scrap is introduced into the ladle refining furnace at a weight ratio higher than 50% of the total fed material and up to 100%, which means complete use of inferior steel scrap.

### 2. Description of Related Art

Traditionally, smelting of iron ore (iron sand) is performed using submerged arc furnaces. In addition to iron ore, steel scrap from construction sites is used in steelworks after it is recycled and recovered as high-quality steel materials through a dual-furnace process. To use steel scrap in steel production, steel scrap is fed into an electric furnace to be melted into high-temperature, liquid molten steel. The molten steel is discharged to a ladle and sent to a ladle refining furnace for refinement. Usually, the molten steel is kept at a proper casting temperature and has its composition adjusted in the refining furnace, so as to produce quality billets. Such a steel making process has been disclosed in some prior patent documents, such as JP7266938B, CN113652523B, and CN117587186A. Therein, steel scrap materials are ranked as primary if they are relatively thick and solid, highly dense, less oxidized, clean, less stained (mixed with less or no grease, paint, water, sand, and organic articles), and have fewer impurities (coated zinc, tin, etc.); otherwise, they are ranked as inferior, such as shavings, turning chips, iron with slag (ball-milled water-washed materials), scales, flame-cutting chips, lapping chips, peels, CNC shavings, and similar metal scrap from metal processing that contain a lot of non-metal particles, grease, and small fragments. The difference in grade is proportional to the difference in price.

In steel making, steel scrap may be introduced into the ladle refining furnace to increase the utilization of steel scrap. This has been described in some prior patent documents, like CN108660287A, CN117431365A, CN117778670A, CN114015836B, and CN221094200U. For example, in CN108660287A, the steel scrap materials refined using a ladle refining furnace are crop ends of steel ribs (opposite to inferior scrap left after machine processing) with a length of ≤100mm and a diameter of ≤40mm. In CN117431365A, the used steel scrap includes edge trimming of steel sheets, billets, and large-tonnage steel scrap such as residual steel from tundish casting (opposite to inferior scrap left after machine processing). In CN114015836B, steel scrap is input to the ladle refining furnace at a ratio of 100kg/per ton of steel to 120kg/per ton of steel.

The refined steel is then sent to a processing plant for further processing. Although steel scrap generated during metal processing, such as shavings, turning chips, iron with slag (ball-milled water-washed materials), scales, flame-cutting chips, lapping chips, peels, CNC shavings, and similar metal scrap from metal processing. has a composition identical to that of the raw material, it can be smeared by cutting fluid or other lubricants and tends to oxidation if the post-processing storage environment is detrimental. This kind of steel scrap is thus disadvantageously fragmental and has high contents of oxygen and impurities, making it different from primary scrap recycled from clean, large-piece, leftover materials and deemed inferior. There is a huge price difference between inferior steel scrap and primary steel scrap. While inferior steel scrap is attractive from the perspective of price, the unstable yield and poor recovery rate in an electric furnace (or a converter) limit its use amount. Some furnaces even prevent the use of any inferior material due to furnace features like blowing refining or dust collection.

Currently, for turning inferior steel scrap into reusable resources, the following solutions are usually taken:
1. The briquette forging method: as described in TW181997B and GB1313545A, inferior steel scrap is ground to homogeneity and pressed into a metal vessel that is then heated and pressured to forge the steel material into billets. Afterward, a reducing atmosphere is introduced to reduce metal oxides therein. The method as disclosed in CN116536535A directly briquettes inferior steel scrap using a hydraulic machine and introduces the resulting lumps into a furnace to smelt the lumps into molten steel. The known method, however, is unsatisfying due to its low efficiency.
2. The electric-furnace smelting method: as described in CN208733152U, inferior steel scrap, and coal are heated in an electric furnace to form molten steel. Carbothermic reduction may be used to reduce metal oxides in the inferior material. The known method nevertheless has the following problems: (1) as the place where the first stage of metal smelting is conducted, for producing a large amount of preliminarily smelted molten steel, the electric furnace is and is usually made large and wide with its lid and upper walls equipped with water-cooling mechanisms. Besides, for melting materials quickly, a high voltage is used here so strong splash of molten inferior steel scrap is likely to attach to the body of the furnace. Further, for collecting heavy dust generated during the smelting operation, a powerful dust-extracting system is usually provided. Consequently, the inferior steel scrap tends to suffer serious loss in the form of slag and collected dust. In addition, the first stage of smelting in the electric furnace involves desiliconization/dephosphorization by injection of gaseous oxygen, so an oxygen-enriched environment is formed in the electric furnace and unfavorable to the effective reduction, deoxidation, and recycling of the fine, crumbled, highly-oxidized inferior steel scrap. The desired yield or the desired recovery rate of noble metals can only be achieved with expensive materials (i.e., primary, quality steel scrap). Consequently, the use amount of inferior steel scrap in the electric-furnace smelting method is usually limited to 30% by weight; (2) its use of fossil fuel incurs concerns about emission and air pollution. CN113430449B has disclosed the use of a low-chromium inferior material in an electric arc furnace as a part of dual-furnace smelting at a ratio of 10% to 40%.
3. The induction-furnace smelting method: as described in CN111575440A and CN001040393A, inferior steel scrap is first washed, dried, and cleaned to remove grease, water, and other impurities, and then placed into an induction furnace (an induction electric furnace) (1) since physical or chemical bridging may lead to steel penetration and gas explosion, impurities have to be removed to prevent uneven heating that can bring about explosion of the induction furnace and industrial safety danger. However, removal of impurities is achieved by chemicals, such as alkali, and thus is harmful to the environment; (2) an induction furnace is usually limited in capacity so the volume of the product from a cycle of smelting is relatively small. Besides, the narrow inlet of the induction furnace is an industrial safety hazard and makes the pre-processing of inferior steel scrap necessary.

In addition to the problems and issues described previously, the existing methods for recycling and processing inferior steel scrap have shortcomings like limited processing capacity for inferior steel scrap, and failure in efficiently decontaminating and recycling noble elements in inferior material steel scrap, such as stainless steel and high alloy steel.

### SUMMARY OF THE INVENTION

For effectively recycling inferior steel scrap, the present invention provides a method for recycling and processing inferior steel scrap through one-stage smelting in a refining furnace. The method comprises the following steps:

feeding the inferior steel scrap into the refining furnace at a weight ratio ranging between 50% and 100% and melting the inferior steel scrap in the refining furnace; and feeding a reducing agent into the refining furnace, so as to reduce and deoxygenate the inferior steel scrap in the refining furnace into molten steel for process use, wherein the inferior steel scrap is selected from all types of steel.

Further, the inferior steel scrap is inferior scrap alloy steel.

Further, feeding the reducing agent into the refining furnace is achieved by introducing coke into the refining furnace, or introducing silicon and lime during the smelting.

Further, a dust cage is provided above the refining furnace to prevent material loss caused by the splash of the molten steel, and to prevent air pollution caused by flying dust formed at a high temperature during the smelting. Furthermore, a dust-collecting structure is provided above the dust cage, thereby elevating the dust-collecting structure to facilitate fast cooling of the flying dust without using water cooling, in which the elevated dust-collecting structure has an extended service life for being protected from contacting excessively dense, high-temperature said flying dust. In a conventional setting, the dust cage and the electrode bar are at similar heights. The present invention achieves the desired effect by having the dust-collecting structure located above the dust cage. For example, the dust-collecting structure may be located 1.5 to 3 times higher than the electrode bar, or at least 2 to 6 meters higher than the electrode bar. Therefore, merely elevating the dust-collecting structure is sufficient to provide the desired effect and shall be regarded as falling within the scope of the present invention, no matter whether it is located above the dust cage or not.

Further, a scrap silo is provided and connected to the scrap silo through a feeding member, and a movable feeding tube is provided and connected to the feeding member and the refining furnace, wherein the movable feeding tube is configured to move between the feeding member and the refining furnace to and fro. The feeding member may be equipped with one of a vibrating mechanism, a rolling mechanism, a stirring mechanism, and an agitating mechanism, so that the feeding position of the inferior steel scrap can be adjusted using vibration, rolling, or stirring/agitation made by a foreign article, thereby achieving continuous feeding of the inferior steel scrap and adjustment of a feeding position of the inferior steel scrap for ensuring smooth feeding.

Further, a scrap silo and a composition-adjusting silo are provided and connected to the refining furnace, so that the inferior steel scrap is fed from the scrap silo, and a composition-adjusting material is fed from the composition-adjusting silo.

Further, a slag mouth is provided and located at a selected height on the refining furnace so as to exclude a part of the molten steel in the refining furnace that is located above the selected height and has a high content of impurities that is located above the selected height and has a high content of impurities.

Further, a tap hole is provided at the bottom of the refining furnace, so as to achieve slag-free tapping in virtue of the tap hole.

Further, the refining furnace has a body constructed from breathable bricks, and air convected in the refining furnace promotes oxidation to remove impurities, such as dephosphorization through oxidation.

Further, molten steel of different compositions may be fed into the refining furnace to produce alloy steel products of different compositions.

The present invention further provides a refining furnace apparatus, for implementing the method for recycling and processing inferior steel scrap through one-stage smelting in a refining furnace as described above. The refining furnace apparatus comprises the following components.

A refining furnace comprises a tap hole located at the bottom of the refining furnace and a slag mouth located at a selected height of the refining furnace. An electrode bar is provided at the top of the refining furnace. A dust cage is located above the refining furnace. A dust-collecting structure is located above the refining furnace, in which the dust-collecting structure is located at a height that is 1.5 to 3 times higher than the height at which the electrode bar is located, or the height of the dust-collecting structure is 2 to 6 meters higher than the height of the electrode bar. S scrap silo comprises a feeding member that is connected to the scrap silo, and a movable feeding tube that is connected to the feeding member and the refining furnace, wherein the feeding member comprises one of a vibrating mechanism, a rolling mechanism, a stirring mechanism, and an agitating mechanism. The movable feeding tube is configured to move between the feeding member and the refining furnace to and fro. A composition-adjusting silo is connected to the refining furnace.

With the foregoing technical features, the present invention achieves the following effects:
1. The present invention uses one-stage smelting in a refining furnace to process and recycle inferior steel scrap. This is done by smelting inferior steel scrap fed into the refining furnace directly to thereby obtain recycled noble metals at a high ratio and produce molten steel that has satisfying quality and can be directly used in processes directly. The weight ratio of inferior steel scrap fed into the refining furnace can be 50% or more, and even 100%, in which case inferior steel scrap is fed into the refining furnace alone for the smelting and recycling process. The present invention therefore can effectively decontaminate inferior steel scrap generated from the production of goods in urban areas and turn low-value inferior steel scrap into high-value steel materials, thereby achieving urban steelmaking.
2. A flame furnace (or an electric furnace) for steelmaking is usually made large and wide with its lid and upper walls equipped with water-cooling mechanisms. Besides, for melting materials quickly, the environment in the furnace features a high voltage and an oxidizing atmosphere. Thus, the smelting process produces strong splash of molten inferior steel scrap and a huge amount dust. While a powerful dust-extracting system is provided to collect the dust, it causes serious loss of the fine, crumbled, inferior steel scrap. By contrast, a refining furnace is compact and slim, and is favorable to formation of an environment full of a reducing atmosphere (+ reducing materials). The process of the present invention is devoid of water cooling and only generates relatively weak splashing that eliminates the need of a dust-extracting system (and the dust-collecting structure of the present invention is situated at an even higher place). The method of the present invention involves performing one-stage smelting on the inferior steel scrap in a refining furnace and adding coke or adding a reducing agent such as silicon and lime during the smelting process for reduction and deoxidation. Thus, a reducing atmosphere existing in the refining furnace helps achieve a high recovery rate of noble metals.
3. As compared to the induction-furnace smelting method, the method of the present invention involves performing one-stage smelting on the inferior steel scrap in a refining furnace and adding coke or adding a reducing agent such as silicon and lime during the smelting process for reduction, so it achieves higher processing capacity and eliminates the need of removing greasy dirt/impurities.
4. In the present invention, the inferior steel scrap fed into the refining furnace to receive one-stage smelting can be of any type, such as inferior scrap of carbon steel or alloy steel. The present invention is particularly useful in recycling high-value alloy steel, such as 304 and 316 stainless steel.
5. With the closed dust cage above the refining furnace, the present invention prevents the molten inferior steel scrap from splashing and consequential loss and prevents air pollution caused by flying dust formed at a high temperature during the smelting. The elevated location of the dust-collecting structure achieved by arranging the dust-collecting structure above the dust cage facilitates fast cooling of the flying dust without using water cooling. This also helps extend the service of the dust-collecting structure by protecting it from absorbing excessively dense, high-temperature flying dust.
6. Since a refining furnace is usually used in the second stage of metal smelting to keep the molten steel from the first stage of smelting hot or refine the molten steel to obtain the desired steel product, it is relatively small in size and has its feed inlet smaller than that of a fuel furnace. As a result, inferior steel scrap pieces with irregular shapes can be stuck at the feed inlet. The present invention incorporates a feeding member and a movable feeding tube to vibrate/roll/stir/agitate the inferior steel scrap pieces and feed the inferior steel scrap pieces in a movable manner, so as to ensure continuous feeding of the inferior steel scrap and allow adjustment of the feeding position of the inferior steel scrap to ensure material delivery.
7. There are only a few types of steel that can leave cutting chips after metal processing. The composition of the molten steel is determined by the input material. The present invention uses a dual-silo structure formed by a scrap silo and a composition-adjusting silo. Through the composition-adjusting silo, a composition-adjusting material such as chromium or manganese may be added according to the desired composition of the molten steel, thereby adding flexibility to the composition of the molten steel.
8. The refining furnace of the present invention has a tap hole provided at its bottom, so as to achieve slag-free, bottom tapping. The refining furnace further has the slag mouth formed at the selected height to help exclude molten steel with high impurity content.
9. The refining furnace has its body constructed from breathable bricks, and air convected in the refining furnace promotes oxidation to remove impurities, such as dephosphorization through oxidation.
10. By feeding the refining furnace with molten steel materials of different compositions, alloy steel products of different compositions can be produced and the use amount of alloy can be decreased.

### BRIEF DESCRIPTION OF THE DRAWINGS

FIG. 1 is a schematic drawing of a refining furnace apparatus according to the present invention.
FIG. 2 is a flowchart of the method of the present invention.

### DETAILED DESCRIPTION OF THE INVENTION

The embodiment described below is for illustrating the method and the apparatus for recycling and processing inferior steel scrap through one-stage smelting in a refining furnace according to the present invention, and not intended to limit the present invention. Therein, the inferior steel scrap refers to scrap generated during metal processing and in the forms of, for example, shavings, turning chips, iron with slag (ball-milled water-washed materials), scales, flame-cutting chips, lapping chips, peels, and CNC shavings.

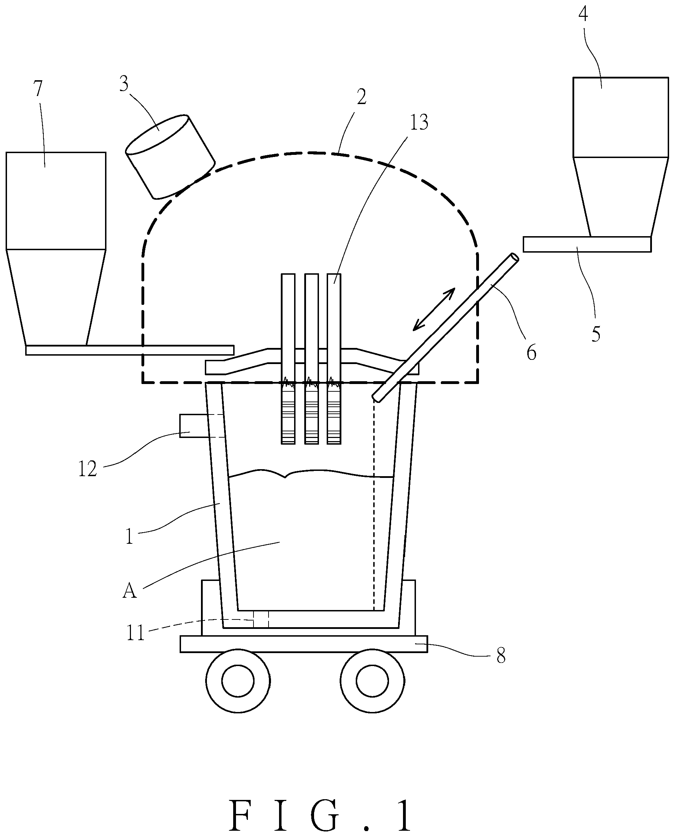

Referring to FIG. 1, the refining furnace apparatus of present embodiment comprises a refining furnace 1 that has a tap hole 11 formed at its bottom and removably covered by a sliding door, and has a slag mouth 12 formed at a selected height thereon. An electrode bar 13 for heating is installed in the upper part of the refining furnace 1. A dust cage 2 is located above the refining furnace 1. A dust-collecting structure 3 is located above the dust cage 2. Particularly, this arrangement is to settle the dust-collecting structure 3 at an evaluated height. For example, the dust-collecting structure 3 is locationally 1.5 to 3 times higher than the electrode bar 13, or is at least about 2 to 6 meters higher than the electrode bar 13 in terms of location. A scrap silo 4 is connected to the scrap silo 4 through a feeding member 5 and is connected to the feeding member 5 and the refining furnace 1 through a movable feeding tube 6. The feeding member 5 is provided with a vibrating mechanism, a rolling mechanism, a stirring mechanism, or an agitating mechanism. The movable feeding tube 6 is configured to move to and from between the feeding member 5 and the refining furnace 1. A composition-adjusting silo 7 is connected to the refining furnace 1. A trolley 8 is also provided for carrying the refining furnace 1. With the trolley 8, the location of the refining furnace 1 can be easily changed.

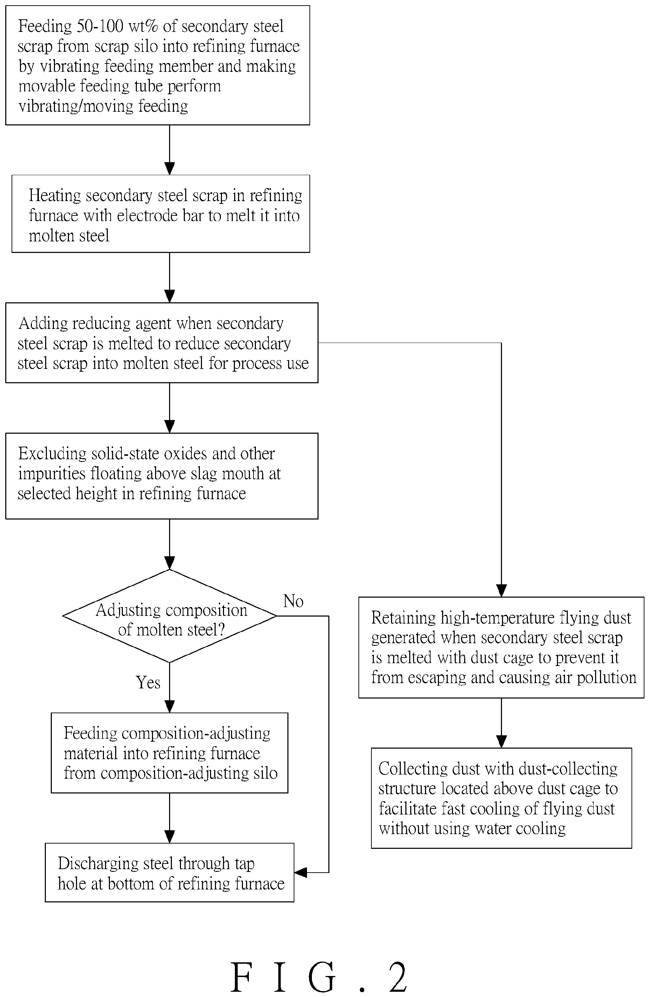

Referring to FIG. 2, to recycle inferior steel scrap through one-stage smelting, inferior steel scrap is introduced into the refining furnace 1 at the weight ratio ranging between 50% and 100%, so that the inferior steel scrap is melted in the refining furnace 1. A reducing agent is also introduced into the refining furnace 1 to reduce and deoxygenate the inferior steel scrap into molten steel A for process use in the refining furnace 1. Therein, the inferior steel scrap is selected from all types of steel, such as inferior scrap of carbon steel or of alloy steel. The present invention is particularly useful in recycling high-value alloy steel, such as 304 and 316 stainless steel.

In the present embodiment, the inferior steel scrap is directly fed from the scrap silo 4, without the need of removing greasy dirt/impurities from inferior steel scrap in advance. With the vibrating mechanism, rolling mechanism, stirring mechanism, or agitating mechanism of the feeding member 5, and the movable feeding tube 6, the inferior steel scrap pieces can be vibrated/rolled/stirred/agitated and fed in a movable manner, so as to ensure continuous feeding of the inferior steel scrap and allow adjustment of the feeding position of the inferior steel scrap to ensure material delivery to the refining furnace 1 by preventing the inferior steel scrap from being stuck at the feed inlet of the refining furnace 1. After the inferior steel scrap is completely fed, the electrode bar 13 heats the inferior steel scrap and melts it into molten steel A. Coke maybe added into the refining furnace 1 or silicon and lime may be added during the smelting process as a reducing agent. In the smelting process, the splashing molten steel A can be retained by the dust cage 2. This prevents the splash of the molten steel A causes loss of the inferior steel scrap. The dust cage 2 also helps prevent the high-temperature flying dust from escaping to pollute the ambient air. The dust-collecting structure 3 is located above the dust cage 2 so as to be elevated. Since the flying dust cools fast, there is no need to use any water-cooling mechanism. This also helps extend the service of the dust-collecting structure 3 by protecting it from absorbing excessively dense, high-temperature flying dust. The refining furnace 1 has its body constructed from breathable bricks, and air convected in the refining furnace 1 promotes oxidation to remove impurities from the molten steel A, such as by dephosphorization through oxidation. There are only a few types of steel can leave cutting chips after metal processing. The composition of the molten steel A is determined by the input material. The present invention uses a dual-silo structure formed by a scrap silo and a composition-adjusting silo 7. Through the composition-adjusting silo 7, a composition-adjusting material such as chromium or manganese may be added according to the desired composition of the molten steel A, thereby adding flexibility of the composition of the molten steel. In the processing of smelting the inferior steel scrap, different molten steel A with another composition may be added into the refining furnace 1 so as to produce alloy steel of a different composition. After the inferior steel scrap is melted into the molten steel A, the slag mouth 12 excludes the part of the molten steel A that contains high contents of floating solid-state oxides and other impurities that is located above the selected height of the refining furnace 1, thereby shortening operation time. Thereby, slag-free tapping can be achieved through the tap hole 11 at the bottom of the refining furnace 1.

Referring to Table 1 below, in one example of the present, inferior scrap of different steel types, including 304, 310, 316, T91, were selected for experiments. Therein, the inferior steel scrap used was in the form of shavings and the ratio of the inferior steel scrap was 100%. After one-stage smelting in the refining furnace, the yields of the molten steel products were of 91.7%~99.3%, demonstrating that the present invention advantageously contributes to a high yield of more than 90%, regardless of the steel used.

**Table 1**

| Steel Material | Material Form | Input | Weight of Molten Steel | Yield |
|---|---|---|---|---|
| 304 | Shaving Briquettes | 23.83 | 22.0 | 92.32% |
| 304 | Shaving Briquettes /Shavings | 60.45 | 56.3 | 93.13% |
| 304 | Shavings | 28.37 | 26.7 | 94.11% |
| 304 | Shavings | 21.25 | 20 | 94.12% |
| 304 | Shavings | 21.92 | 20.7 | 94.43% |
| 304 | Shaving Briquettes /Shavings | 61.63 | 58.2 | 94.43% |
| 304 | Shavings | 21.15 | 20 | 94.56% |
| 304 | Shaving Briquettes /Shavings | 24.3 | 23.1 | 95.06% |
| 304 | Shavings | 23.04 | 22.0 | 95.49% |
| 304 | Shavings | 28.64 | 27.6 | 96.37% |
| 304 | Shavings | 19.22 | 18.6 | 96.77% |
| 304 | Shavings | 23.04 | 22.5 | 97.66% |
| 310 | Shavings | 24.135 | 22.3 | 91.71% |
| 310 | Shavings | 22.34 | 20.5 | 91.76% |
| 310 | Shavings | 21.35 | 21.2 | 99.30% |
| 316 | Shavings | 20.32 | 18.7 | 92.03% |
| 316 | Shavings | 20.7 | 19.1 | 92.27% |
| 316 | Shavings | 21.64 | 21.1 | 97.50% |
| 316 | Shavings | 19.74 | 19.3 | 97.77% |
| 316 | Shavings | 20.5 | 20.1 | 98.05% |
| 316 | Shavings | 25.7 | 25.2 | 98.05% |
| 316 | Shavings | 28.15 | 27.8 | 98.76% |
| T91 | Shavings | 16.81 | 16.4 | 97.56% |

Referring to Table 2 and Table 3 below, a comparison is made among (1) the yield of molten steel obtained by a traditional steelwork using a fuel furnace (electric furnace) to smelt primary steel scrap, (2) the yield of molten steel obtained using the prior-art fuel-furnace (electric-furnace) smelting method with inferior steel scrap, (3) the estimated yield of molten steel obtained using the prior-art fuel-furnace (electric-furnace) smelting method with 100% inferior steel scrap, and (4) the yield of molten steel obtained using one-stage smelting in the refining furnace according to the present invention with inferior steel scrap. In Table 3, YS and YT are codes of plants operated by the inventor of the invention. As shown in Table 2 and Table 3, the yield of molten steel obtained using the prior-art fuel-furnace (electric-furnace) smelting method with inferior steel scrap is lower than that obtained by the traditional steelwork using a fuel furnace (electric furnace) to smelt primary steel scrap. The estimated yield of molten steel related to use of 100% inferior material is even lower. Therefore, as described in the prior art, when the fuel-furnace (electric-furnace) smelting method is used to process and recycle inferior steel scrap, the ratio of the fed inferior steel scrap is usually below 30 wt%. On contrast, when inferior steel scrap was processed using one-stage smelting in the refining furnace of the present invention, the yield of the molten steel was even higher than that achieved by the traditional steelwork using the fuel furnace (electric-furnace) smelting method with primary steel scrap. It is thus clear that the present invention can effectively decontaminate inferior steel scrap, and with high-ratio use of inferior steel scrap, the production costs of molten steel can be significantly decreased as compared to the traditional solutions that use raw ore or primary materials.

**Table 2**

| | Conventional | Comparative Example | Comparative Example (Est.) | This Invention |
|---|---|---|---|---|
| Furnace | EAF | EAF | EAF | LH |
| Material | Primary Material | Primary Material +Inferior | Inferior Material 100% | Inferior Material 100% |
| | | Material (1~15%) | | |
| Steel Type | 304, 316 | 304, 316, 300 Series | 304, 316, 300 Series | 304,310,316, T91 |
| Yield | 95%~97% | 92~96% | 65%~90% | 91.7%~99.3% |

**Table 3**

| # | Steel Type | Weight of Inferior Material | Ratio of Inferior Material (%) | Yield (%) | Yield Differ ence (%) | Estimated Yield from 100% Inferior Material (%) |
|---|---|---|---|---|---|---|
| YS01-1 | 300 Series | 0 | 0% | 95.8% | -- | -- |
| YS01-2 | 300 Series | 5647Kg | 8.5% | 94.7% | -1.1% | 94.7-11.6=83.1% |
| YS02-1 | 300 Series | 0 | 0% | 95.2% | -- | -- |
| YS02-2 | 300 Series | 10007Kg | 14.5% | 93.5% | -1.7% | 93.5-10.2=83.3% |
| YS03-1 | 300 Series | 0 | 0% | 94.0% | -- | -- |
| YS03-2 | 300 Series | 10003Kg | 14.2% | 92.7% | -1.2% | 92.7-8.65=84.5% |
| YS04-1 | 300 Series | 0 | 0% | 95.82% | -- | -- |
| YS04-2 | 300 Series | 9980Kg | 14.3% | 95.05% | -0.8% | 95.05-5.37=89.68% |
| YT01-1 | 304 | 0 | 0% | 95.88% | -- | -- |
| YT01-2 | 304 | 1.29t | 1.85% | 95.40% | - 0.48% | 95.4-26.04=69.36% |
| YT02-1 | 316 | 0 | 0% | 96.67% | -- | -- |
| YT02-2 | 316 | 1.68t | 2.48% | 95.93% | - 0.74% | 95.93-29.94=65.99% |

The method for recycling and processing inferior steel scrap through one-stage smelting in a refining furnace as disclosed herein has not been anticipated by any prior-art method. As compared to the prior-art methods in which only 30wt% or less inferior steel scrap can be used in every cycle of smelting, the one-stage smelting method of the refining furnace according to the present invention can achieve a high use ratio of inferior steel scrap in the refining furnace (higher than weight ratio 50%, and even up to 100%), and recycle noble metals at a high recovery rate. Hence, the present invention has inventive steps as it provides unexpected results. Moreover, the disclosed method that uses one-stage smelting in a refining furnace to recycle inferior steel scrap with a high use ratio of inferior steel scrap has never been used in the steel industry. The present invention thus overcomes technical bias and solves the long unsolved problem of recycling inferior steel scrap, thereby satisfying inferior consideration for determining inventive step.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications that do not depart from the concept of the present invention should be encompassed by the appended claims.

## Claims

1. A method for recycling and processing inferior steel scrap through one-stage smelting in a refining furnace (1), comprising steps of:
feeding the inferior steel scrap into the refining furnace (1) at a weight ratio ranging between 50% and 100%, and melting the inferior steel scrap in the refining furnace (1); and
feeding a reducing agent into the refining furnace (1), so as to reduce and
deoxygenate the inferior steel scrap in the refining furnace (1) into molten steel (A) for process use,
wherein the inferior steel scrap is selected from all types of steel.

2. The method according to claim 1, **characterized in that** the inferior steel scrap is inferior scrap alloy steel.

3. The method according to claim 1, **characterized in that** feeding the reducing agent into the refining furnace (1) is achieved by introducing coke into the refining furnace (1), or introducing silicon and lime during the smelting.

4. The method according to claim 1, **characterized in that** a dust cage (2) is provided above the refining furnace (1) to prevent material loss caused by splash of the molten steel (A), and to prevent air pollution caused by flying dust formed at a high temperature during the smelting.

5. The method according to claim 1, **characterized in that** an electrode bar (13) is provided at a top of the refining furnace (1), and a dust-collecting structure (3) is located at a height that is 1.5 to 3 times higher than a height at which the electrode bar (13) is located, or the height of the dust-collecting structure (3) is 2 to 6 meters higher than the height of the electrode bar (13), thereby elevating the dust-collecting structure (3) to facilitate fast cooling of the flying dust without using water cooling, in which the elevated dust-collecting structure (3) has an extended service life for being protected from contacting excessively dense, high-temperature said flying dust.

6. The method according to claim 1, **characterized in that** a scrap silo (4) is provided and connected with a feeding member (5), and that a movable feeding tube (6) is provided and connected to the feeding member (5) and the refining furnace (1), wherein the movable feeding tube (6) is configured to move between the feeding member (5) and the refining furnace (1) to and fro, so as to achieve continuous feeding of the inferior steel scrap and adjustment of a feeding position of the inferior steel scrap.

7. The method according to claim 6, **characterized in that** the feeding member (5) comprises one of a vibrating mechanism, a rolling mechanism, a stirring mechanism, and an agitating mechanism.

8. The method according to claim 1, **characterized in that** a scrap silo (4) and a composition-adjusting silo (7) are provided and connected to the refining furnace (1), so that the inferior steel scrap is fed from the scrap silo (4), and a composition-adjusting material is fed from the composition-adjusting silo (7).

9. The method according to claim 1, **characterized in that** a slag mouth (12) is provided and located at a selected height on the refining furnace (1) so as to exclude a part of the molten steel (A) in the refining furnace (1) that is located above the selected height and has a high content of impurities that is located above the selected height and has a high content of impurities.

10. The method according to claim 1, **characterized in that** a tap hole (11) is provided at a bottom of the refining furnace (1), so as to achieve slag-free tapping in virtue of the tap hole (11).

11. The method according to claim 1, **characterized in that** the refining furnace (1) has a body constructed from breathable bricks to allow air convected in the refining furnace (1) to promote oxidation to remove impurities.

12. The method according to claim 1, **characterized in that** molten steel (A) batches of different compositions are fed into the refining furnace (1) to produce alloy steel products of different compositions.

13. A refining furnace apparatus for implementing the method according to any of claims 1 through 12, comprising:
a refining furnace (1), comprising a tap hole (11) located at a bottom of the refining furnace (1), a slag mouth (12) located at a selected height of the refining furnace (1),
an electrode bar (13) located at a top of the refining furnace (1), and a body constructed from breathable bricks;
a dust cage (2), being located above the refining furnace (1);
a dust-collecting structure (3), being located above the refining furnace (1), in which the dust-collecting structure (3) is located at a height that is 1.5 to 3 times higher than a height at which the electrode bar (13) is located, or the height of the dust-collecting structure (3) is 2 to 6 meters higher than the height of the electrode bar (13);
a scrap silo (4), comprising a feeding member (5) that is connected to the scrap silo (4), and a movable feeding tube (6) that is connected to the feeding member (5) and the refining furnace (1), wherein the feeding member (5) comprises one of a vibrating mechanism, a rolling mechanism, a stirring mechanism, and an agitating mechanism,
and the movable feeding tube (6) is configured to move between the feeding member (5) and the refining furnace (1) to and fro; and
a composition-adjusting silo (7), being connected to the refining furnace (1).

## Amended claims

### Amended claims in accordance with Rule 137(2) EPC.

1. A method for recycling and processing inferior steel scrap through one-stage smelting in a refining furnace (1), comprising steps of:
feeding the inferior steel scrap into the refining furnace (1) at a weight ratio ranging between 50% and 100%, and melting the inferior steel scrap in the refining furnace (1); and
feeding a reducing agent into the refining furnace (1), so as to reduce and deoxygenate the inferior steel scrap in the refining furnace (1) into molten steel (A) for process use,
wherein the inferior steel scrap is selected from all types of steel, and wherein the inferior steel scrap refers to scrap generated during metal processing and in the forms of any of shavings, turning chips, iron with slag, scales, flame-cutting chips, lapping chips, peels, and CNC shavings.

2. The method according to claim 1, **characterized in that** the inferior steel scrap is inferior scrap alloy steel.

3. The method according to claim 1, **characterized in that** feeding the reducing agent into the refining furnace (1) is achieved by introducing coke into the refining furnace (1), or introducing silicon and lime during the smelting.

4. The method according to claim 1, **characterized in that** a dust cage (2) is provided above the refining furnace (1), wherein, during the smelting, splashing molten steel (A) is retained by the dust cage (2), thereby preventing material loss caused by splash of the molten steel (A), and wherein the dust cage (2) also helps to prevent the high-temperature flying dust from escaping, thereby preventing air pollution caused by the said flying dust formed at a high temperature during the smelting.

5. The method according to claim 1, **characterized in that** an electrode bar (13) is provided at a top of the refining furnace (1), and a dust-collecting structure (3) is located at a height that is 1.5 to 3 times higher than a height at which the electrode bar (13) is located, or the height of the dust-collecting structure (3) is 2 to 6 meters higher than the height of the electrode bar (13), thereby elevating the dust-collecting structure (3) to facilitate fast cooling of the flying dust without using water cooling, in which the elevated dust-collecting structure (3) has an extended service life for being protected from contacting excessively dense, high-temperature said flying dust.

6. The method according to claim 1, **characterized in that** a scrap silo (4) is provided and connected with a feeding member (5), and that a movable feeding tube (6) is provided and connected to the feeding member (5) and the refining furnace (1), wherein the movable feeding tube (6) is configured to move between the feeding member (5) and the refining furnace (1) to and fro,
wherein the feeding member (5) comprises one of a vibrating mechanism, a rolling mechanism, a stirring mechanism, and an agitating mechanism,
wherein, with the vibrating mechanism, rolling mechanism, stirring mechanism, or agitating mechanism of the feeding member (5) and the movable feeding tube (6), the inferior steel scrap is vibrated/rolled/stirred/agitated and fed in a movable manner, so as to ensure continuous feeding of the inferior steel scrap and allow adjustment of the feeding position of the inferior steel scrap to ensure material delivery to the refining furnace (1) by preventing the inferior steel scrap from being stuck at a feed inlet of the refining furnace (1).

7. The method according to claim 1, **characterized in that** a scrap silo (4) and a composition-adjusting silo (7) are provided and connected to the refining furnace (1), so that the inferior steel scrap is fed from the scrap silo (4), and a composition-adjusting material is fed from the composition-adjusting silo (7).

8. The method according to claim 1, **characterized in that** the refining furnace (1) has a body constructed from breathable bricks to allow air convected in the refining furnace (1) to promote oxidation to remove impurities.

9. The method according to claim 1, **characterized in that** molten steel (A) batches of different compositions are fed into the refining furnace (1) to produce alloy steel products of different compositions.
